# EUROPEAN PATENT SPECIFICATION

(11) **EP 0 422 694 B1**
(45) Date of publication and mention of the grant of the patent: **22.03.1995**
(21) Application number: 90124000.2
(22) Date of filing: 11.07.1986
(51) Int. Cl.: E01F 9/08, G08B 21/00, E01F 9/00

(54) **Luminous horizontal roadway marking strips, and method and devices for forming such luminous horizontal roadway markings**
Leuchtende Markierungsbänder für Verkehrsflächen und Verfahren und Vorrichtungen zum Herstellen solcher Bänder
Bandes lumineuses pour la signalisation routière horizontale et procédé et dispositifs pour les réaliser

(30) Priority: 23.07.1985 CH 3197/85; 03.04.1986 CH 1294/86; 08.04.1986 CH 1360/86
(43) Date of publication of application: 17.04.1991
(62) Divisional of application: 86109507.3
(73) Proprietor: MINNESOTA MINING AND MANUFACTURING COMPANY, St. Paul, Minnesota 55144 (US)
(72) Inventor: Eigenmann, Ludwig, Dr. Niroguide S. A., Agno (Ticino) (CH)
(74) Representative: Baillie, Iain Cameron

(56) References cited:
- EP-A- 0 033 525
- EP-A- 0 089 215
- EP-A- 0 144 458
- BE-A- 424 718
- DE-A- 1 910 646
- DE-A- 1 957 630
- DE-A- 2 005 751
- DE-A- 2 417 584
- DE-A- 2 527 877
- DE-A- 2 609 318
- DE-A- 2 901 196
- DE-A- 2 940 205
- DE-A- 3 031 246
- FR-A- 2 340 410
- GB-A- 1 123 354
- GB-A- 2 081 485
- US-A- 3 836 275
- US-E- 31 291

## Description

The problem of traffic safety, especially at night, has prompted a good deal of study and experimentation, a considerable contribution having also been made by the applicant, in the specific field of the horizontal road marking; that is that marking which is designed to supply the motorist with quick and accurate information regarding the aspects of the road - curves, intersections, deviations, obstacles, etc. - under all kinds of illumination and weather conditions.

In addition to numerous inventions regarding nighttime traffic safety, based on the use of retroreflecting elements, the applicant has also developed systems which incorporate their own light source. Under particularly foggy or misty conditions, the efficiency of such systems is superior to the systems using retroreflecting elements. These latter systems, however, have been made more and more efficient in recent years, also through developments made by the applicant.

The applicant has claimed the development of a marking strip that gives off its own light in its Italian Patents Nos. 982,743 and 990,780 and in the corresponding USA Patent No. 3,996,556. The light is produced by incandescent or fluorescent lamps or by luminous pigments activated by visible and even non-visible light.

On the one hand, however, these light sources are not very suited for sustaining the stress of traffic and, in addition, have rather short service lives when kept constantly lit, say, during the nighttime hours. On the other hand, there is also the consideration of the required current, especially in the light of having to use - in the practical case - storage batteries to supply this current.

A prior art that is of interest is DE-A-2 417 584 that discloses in accordance with the pre-characterizing part of the accompanying Claim 1 a roadway marking material having electrically energized light sources and circuitry permitting said lights to be switched on when a sensor associated with said material detects the lights of an approaching vehicle. Furthermore, this prior art document suggests the incorporation of timers, known per se, in the roadway marking material for time controlling the energisation of the electrically energized light sources in response to the detection by said sensor of the lights of an approaching vehicle.

A further prior art that is of interest is that disclosed in EP-A-0 144 485 that is concerned with fog problems. This prior art teaches that roads subjected to much traffic should be divided into separate lengths and that each length should have its own particular group of lamps spaced apart along each of its two sides, these lamps facing towards the oncoming traffic. Each road length has its own power supply point for all of the lamps of said length and each power supply point is controlled by its own photo-cell. The specification states that each photo-cell can detect when fog conditions reach a predetermined valve but does not disclose how this is to be achieved; or that each photo-cell can detect a certain degree of dimness but does not disclose how the photo-cell can detect such a dimness not what happens if it is a cloudy day; nor what will happen if fog exists at night time. When the photo-cell reacts this causes the fog lamps associated with said photo-cell to be switched on.

The invention is as defined in the accompanying claims.

The invention involves the use of a luminous marking strip applied to the roadway surface, which is not simply an improvement over the above-mentioned type but actually represents an important innovation that ingeniously combines the most up-to-date technical discoveries to achieve the objective. The invention proposes, most importantly, the use of Light Emitting Diodes (LEDs) for providing the light for the marking strip. When, for example, a 12-volt potential is applied to those appropriately "doped" semiconductors, they emit photons and become luminous and are visible over long distances during the nighttime hours. The amount of current drawn is vary low as compared to the producing of the same amount of light by an incandescent lamp. The produced light can be more or less focused and, depending on the particular type of "doping" used, certain colors can be obtained. It was also unexpectedly found that LEDs are resistant to traffic vibrations, which are significant vibrations even if not very perceptibile to our physical senses.

According to this invention, the LEDs are distributed and appropriately spaced (indicatively but not necessarily at intervals of several tens of centimeters) along the marking strip, and contained inside of protruding transparent capsules imbedded in the marking strip itself, as shown more clearly in the diagram described further on.

This invention, in particular, also provides for the use of filament or halogen type of microlamps for special applications - as described further on - which are powered by an external current source. As regards the current source, provision is made for all these cases to limit the amount of current required to the absolute minimum, the current being furnished either by photoelectric solar cells, a bank of storage batteries or - as mentioned previously - a standard electrical network.

In all cases, the characteristic which is common for all the variations of this invention is the ability of the luminous marking strip to be activated by the light coming from the headlights of the oncoming vehicle. In this case, the marking strip is activated on command when, and for the length of time, necessary.

One of the very important possibilities offered by the luminous marking strip described in this invention is the possibility of providing differentiated roadmarking indications; for example, the use of different colored lights for signaling the presence of ice on the road.

In all the cases considered, provision is made for the combined use of retroreflecting elements for nighttime roadmarking service, that can be particularly useful in an emergency situation where the main roadmarking devices - that are the object of this invention - do not illuminate due to the current being interrupted for any reason whatsoever.

The aforementioned retroroflecting elements could be of the type described in the applicant's USA Patants Nos. 4,072,403, 4,469,645 and R 31,291.

The different ways of applying this invention are described below with reference made to the following diagrams:
- Fig. 1, schematically showing the marking strip with the light sources applied to it, and the light-source activator which is sensitive to the lights from the headlights of the approaching motor vehicle.
- Fig. 2, representing the luminous marking strip applied along a curve.
- Fig. 3, representing a luminous marking strip equipped with a photosensitive device for turning on the low-current-draw luminous elements, and another device for turning on the microlamps, fed by an external current source, then fog conditions exist.
- Fig. 4, showing a detail of Fig. 3.
- Fig. 5, representing a non-limiting example of a circuit for realizing the arrangement illustrated in Figs. 3 and 4.
- Fig. 6, representing an example of the distribution on the marking strip of the elements forming the alternative shown in Figs. 3 & 4.
- Fig. 7, representing a luminous marking strip whose luminous elements are fed by current produced by solar cells and which has catadioptric prisms arranged next to the luminous elements.
- Fig. 8, representing a non-limiting example of a circuit for realizing the arrangement illustrated in Fig. 7.

This invention and the various alternatives will now be examined in detail, with references made to the above-mentioned diagrams.

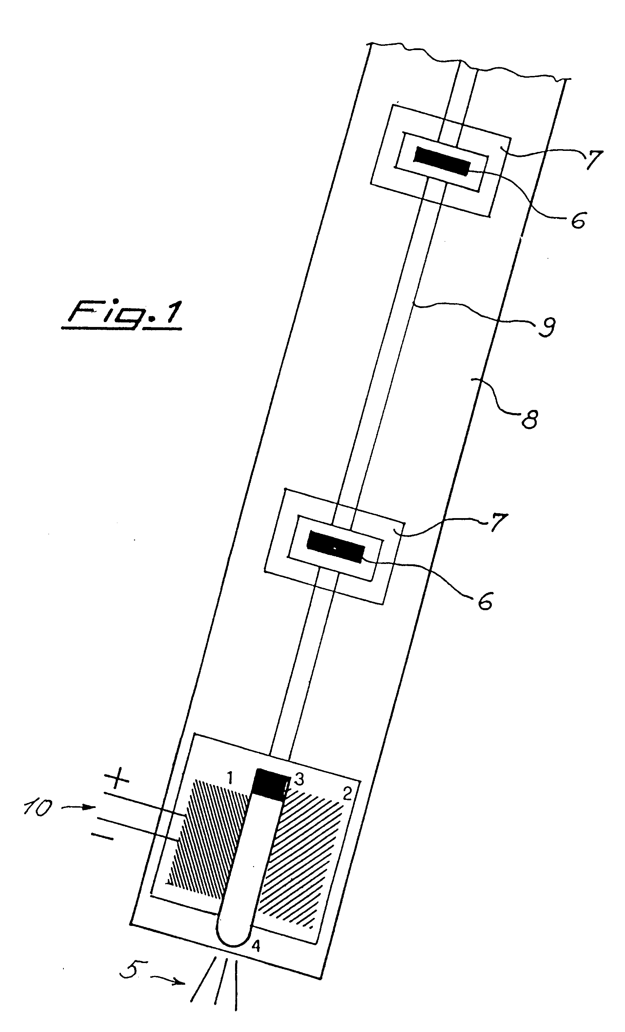

In Fig. 1, the microswitch (1) is actuated through the microamplifier (2) by the photoelectric cell (3); the microfocusing lens (4) has the function of concentrating the light beams (5), coming from the headlights of the oncoming motor vehicle, onto the photoelectric cell (3), and can be appropriately oriented to select a particular actuating beam of light.

When the photoelectric cell (3) causes the microswitch (1) to close, the current coming from the source (10) passes through the conductors (9) to the light sources (6) - which are, for example, LEDs - located inside the protruding transparent bodies (7) applied to the marking strip (8).

The conductors (9) can consist of a brass network and be immersed in the body or in the bonding material of the strip (8).

The current source (10) can be a traditional current source or a photovoltaic cell and batteries, as we shall better describe further on.

As an alternative, light sources (6) having different colors can be provided, alternating red and green for example, with timers, or some other such means, being used to illuminate them at different times. In this event, there will be three conductions (9) instead of two.

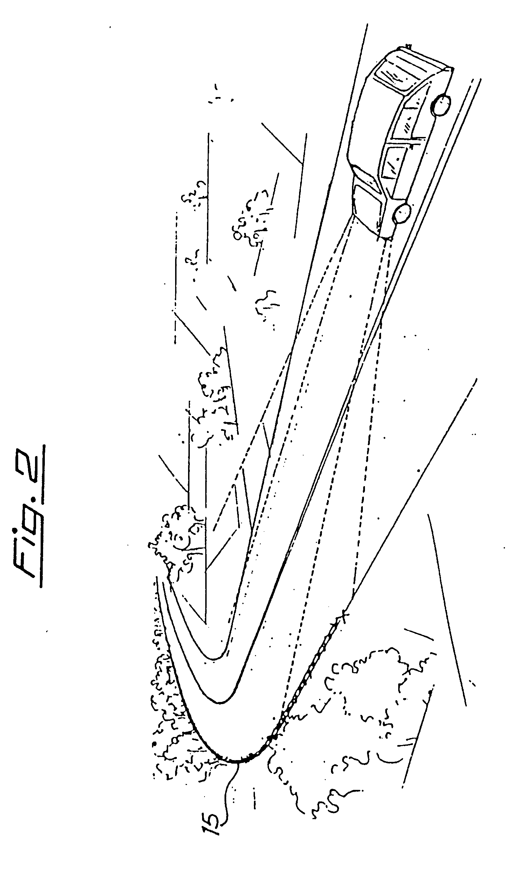

Fig. 2 shows another application of this invention. The head-light beams from a vehicle pass through devices similar to those described above and cause the light sources along the strip (15) to be turned on. The said light sources follow the curve of the road and thus show this curve to the driver of the oncoming motor vehicle.

This type of marking strip is especially useful at stop lights when there is fog present.

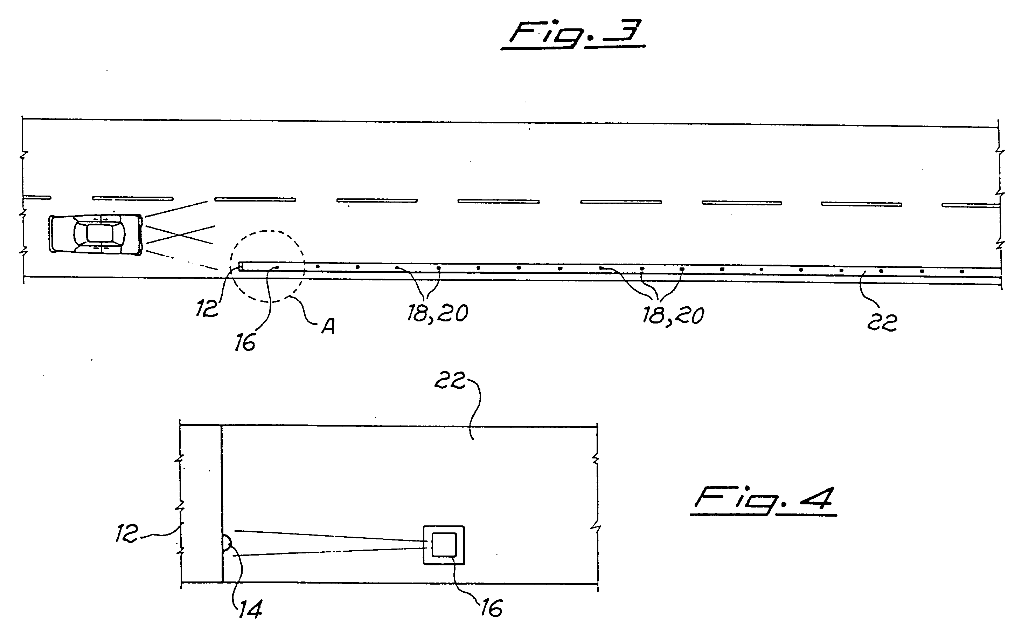

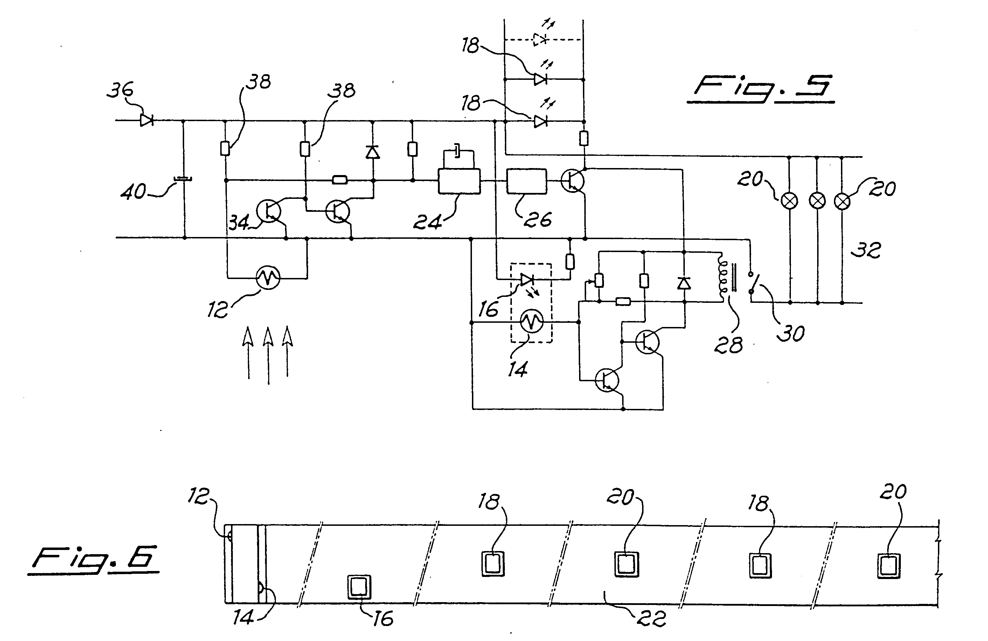

Fig. 3 schematically shows a marking strip that was also designed to provide a high degree of safety when fog conditions exist on the road, especially on curves and at intersections. The marking strip is provided with a double system of luminous elements, one consisting of LEDs - mentioned earlier - and the other of filament or halogen-type microlamps. The use of filament or halogen-type microlamps are necessary for illuminating marking strips under foggy conditions because the intensity of just the light produced by the LEDs is not strong enough to provide adequate visibility.

The two problems that we have here are that the illuminated bodies - especially the filament type - have to resist being exposed to traffic vibrations and, secondly, they absorb a considerable amount of current. The vibration-resistance problem has, fortunately, been overcome recently by the advent of filament-type micro lamps on the market that are quite rugged - the filament being short and thick - and particularly resistant to vibration.

We still, however, have the problem of the high current requirement. If the installation is not a very small one, the current has to be provided by an external source. The operating purpose of this current source - and, thus, its cost - can be redimensioned by automation of the roadmarking system, whereby the microlamps needed for foggy conditions are only activated by the headlights of approaching traffic when fog is present. Otherwise they do not turn on. Furthermore, they operate intermittently.

Since foggy conditions occur sporadically, the filament or halogen-type microlamp markings have to be used in conjunction with a LED system to provide a roadway marking system that is valid both when the weather is foggy and when there is no fog present.

This combined type of marking system has two photosensitive devices. The first device activates the LED circuit when it is contacted by the headlight beams of the approaching motor vehicles, and the second device deactivates the filament or halogen-type microlamp circuit, which interrupts the current to the microlamps when there is no fog present.

This second circuit naturally needs devices that can vary the luminosity and the sensitivity of the photosensitive device that controls the opening and closing of the microlamp circuit. In foggy weather, the amount of light received by the photosensitive device that controls the microlamp circuit is considerably diminished, which keeps the circuit from opening: it remains closed. Both photosensitive devices can be provided with a focusing lens unit for concentrating the light coming from the headlights of the approaching motor vehicles or from the LED (16), so as to increase the efficiency.

Fig. 3 shows a non-limiting example of the arrangement of a marking strip (22) on a roadway, with zone A also being shown enlarged in Fig. 4. The LEDs (18) or filament or halogen-type microlamps (20) - the luminous indicating elements - are shown applied onto the strip. The light detector unit (12) is also shown, which receives the light from the headlights of the approaching motor vehicles and which can be a photoelectric cell, phototransitor or the like, as well as the fog-signaling unit which consists of a LED (16) and a photosensitive device (14).

The diagram shown in Fig. 5 is a non-limiting example of the arrangement of the various elements for realizing the forementioned embodiment of this invention.

Again, there is the photosensitive unit or light detector (12), which receives the light from the motor-vehicle headlights, and the analogous unit (14) that, together with the LED (16), reveals the presence of fog.

Then there are again the LEDs (18) that are turned on by the light-detector unit (12), activated by the headlights of the approaching motor vehicle. The LEDs do not turn on immediately but are controlled by a timer (24) that turns them on only after a certain period of time, to allow the vehicle to come closer to the initial part of the marking strip. The timer can be set to allow a time lag of just a few seconds or for a longer period of time, depending on the average traffic speed in the particular zone. Another timer (26) can be provided, as required, to make the LEDs operate in a blinking mode.

As previously mentioned, the LEDs can receive their current from a bank of standard storage batteries, or a combination of photovoltaic solar cells and storage batteries can be used, as is described more in detail further on.

When fog conditions obtain, the reduced intensity of the light received by the photosensitive device (14) causes the relay (28) to actuate and turn off the switch (30). This causes current to flow to the microlamps (20) from an appropriate external line (32).

The microlamps (20) are also controlled by the timers (24) and (26). The presence of timer (26) to provide the blinking mode is in this case very appropriate.

The circuit is completed by appropriate amplifying transsistors (34), the diodes (rectifiers) (36) resistances (38) and capacitors (40).

Fig. 6 gives an example of the arrangement of the LEDS (18), the microlamps (20) and the LED 16 on the marking strip. The luminous elements in this version can also be combined with, or alternated with, the type of retroreflector elements covered in the applicant's previously-mentioned patents, notwithstanding the fact that the luminous marking strip and inherent circuits are realized with high-tech elements, which then provides a considerable guarantee of high efficiency.

As previously mentioned, the LEDs can be fed by the electrical energy produced by solar cells or photovoltaic batteries. Such a system constitutes one of the versions that completes this invention.

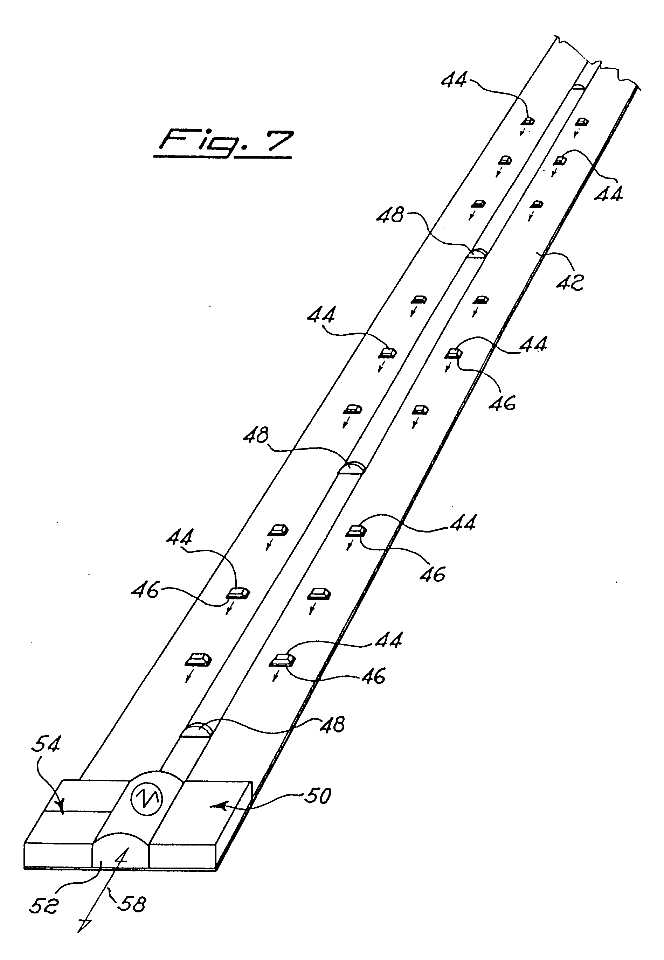

The roadmarking strip (42) shown in Fig. 7 has solar cells (44) applied to it. They are arranged next to retroreflecting elements, shown in the figure as catadioptric prisms (46), which are the retroreflecting units that are the object of the applicant's aforementioned USA Patent No. 31,291. The catadioptric prisms are shown here arranged below the solar cells but, as previously mentioned, they can be arranged next to the solar cells, or even spaced therefrom without exceeding the limits of this invention.

The arrangement of the LEDs (48) is only indicative by way of example, and in no way restrictive.

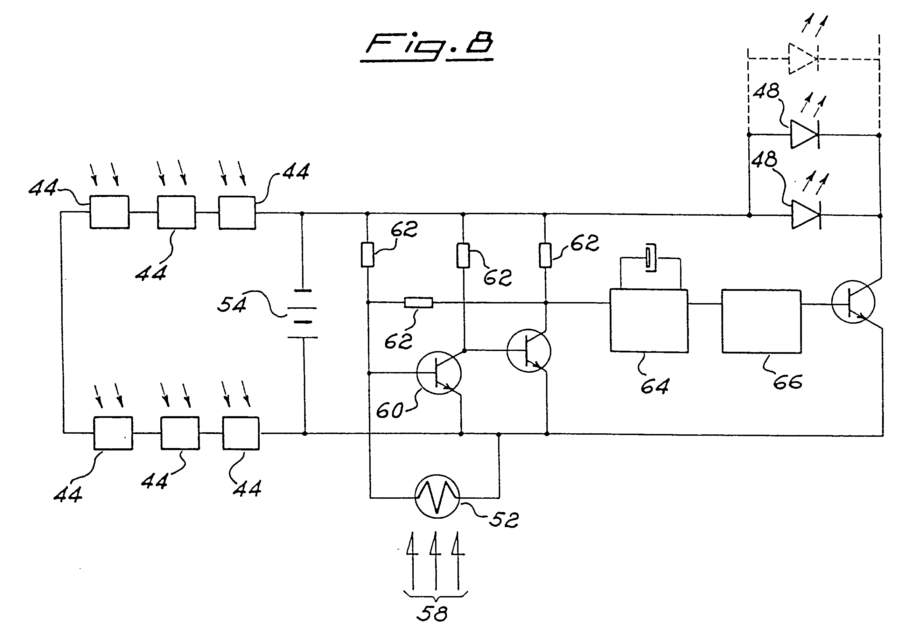

The control box (50), which contains a light detector (52), one or more batteries (54) and timers, is schematically represented and located at the beginning end of the marking strip (42). The contents of the box (50) are connected together as shown, by way of example, in Fig. 8. This shows how the solar cells (44) feed the batteries (54) to keep them at full charge.

The light detector (52) consists essentially of a photoelectric cell, or a phototransistor, and a microswitch. When the light detector (52) receives the light from the headlights (58) of an approaching motor vehicle, the circuit that feeds current from the batteries (54) to the LEDs (48) is closed by means of the appropriate transfer unit (60) and resistors (62).

The closure of the circuit may not be immediate nor continuous.

In fact, a timer (64) can be provided to cause a time lag between the time the beam from the headlights (58) strikes the light detector (52) and the LEDs (48) light up. Furthermore, another timer (66) can be provided to cause the light emitted by the LEDs (48) to blink on and off.

Both the light detector (52) and timers (64) & (66) are readily available on the market, as are also the photovoltaic batteries, which are usually made of laminated silicon crystals.

The LEDs are of the type that draw a small amount of current.

It is underlined that the circuit shown in Fig. 8 is only an example, and this invention can be realized using any other type of circuit that connects up the various elements regarding this invention so as to give the same results.

The active, independent marking strip covered by this invention, which is activated by the approaching traffic, reveals itself as being very valuable for use in places where there are problems regarding the maintenance of road safety.

The warning of an ice hazard by means of the prefabricated, luminous roadway marking strip described in this invention can also be implemented electrically, using sensors located, for example, inside of the control box (50), which can give a warning that is given at a preset temperature. When this preset temperature obtains, the sensor lights up a certain-colored LED - for example, red - which provides the warning of the icy condition of the road. Such technology is already well known by the experts in this field.

## Claims

1. A prefabricated tape-like composite roadway marking material for horizontal road-marking purposes, in the form of a composite marking strip, comprising in combination:
a) a continuous base strip (8, 22, 42) to be applied to the surface of the roadway;
b) a series of transparent protruding elements (7) located in predetermined positions distributed along said base strip, said protruding elements housing low-current-drawing active electrical light sources (6, 16, 18, 48);
c) circuit means connecting said electrical light sources with a low-current electrical power supply including control switch means (1, 12, 24, 26, 34, 38, 52, 60, 62, 64, 66) for controlling the energization of said light sources with current generated by said power supply, said circuit means being arranged in said base strip;
d) said control switch means comprising a photosensitive device (1-4, 12, 52) located on the strip and arranged for being excited by light from the head-lights of approaching motor vehicles whereby to effect energization of said light sources in dependence on light received from the head-lights of approaching motor vehicles;
**characterized in that**
in addition to said low-current-drawing light sources (6, 16, 18, 48) there are also arranged on said marking strip (22) filament-type microlamps (20) for use when foggy conditions exist; and in that
in addition to said photosensitive device (12, 52) controlling the energization of said low-current-drawing light sources (16, 18, 48) there is also a further photosensitive device (14) positioned facing in the opposite direction to said photosensitive device (12) controlling said low-current-drawing light sources and facing one or more of said low-current drawing light sources positioned on said marking strip such that when excited by one of said low-current-drawing light sources said further photosensitive device activates the current to said filament-type microlamps (20) when foggy conditions exist.

2. The marking material according to Claim 1 in which a relay (28) turns on a switch (30) when a reduced intensity of light is received by said further photosensitive device (14) to cause current to flow to the microlamps (20) from an external line (32).

3. The marking material according to Claim 2 and wherein said relay (28) turn off said switch (30) when the amount of light received by said second photosensitive device (14) is not diminished by fog.

4. The marking material according to Claim 2 or Claim 3 and wherein both photosensitive devices are provided with a focussing lens unit for concentrating the light coming from the headlights of an approaching motor vehicle.

5. The marking material according to any one of Claims 1 to 4 and in which said control switch means further comprises a timer (64, Fig. 8) to cause a time lag between the time said photosensitive device (52, Fig. 8) is excited and when said low-current-drawing light sources are energized.

6. The marking material according to any one of Claims 1 to 5 in which said control switch means further comprises a timer (66, Fig. 8) to cause said low-current-drawing light sources to operate in a blinking mode.

7. The marking material according to anyone of Claims 1 to 6 comprising photoelectric current generators (44, Fig. 7) for receiving day light solar energy and converting it into electrical energy, via suitable storage means (54, Fig. 8) for providing said low-current electrical power supply, said current generators (44) and said storage means (54) being mounted on or in said base strip.

8. The marking material according to any one of the preceding claims further characterized in that said low-current-drawing electrical light sources are light-emitting diodes.

9. The marking material of any of the preceding claims further characterized in that said photosensitive device comprises a light focusing unit (4, Fig. 1).

10. The marking material of any of the preceding claims further characterized in that said material further comprises retroreflecting elements (46, Fig. 7) on the surface thereof.

11. The marking material of Claim 10 further characterized in that said retroreflecting elements are catadioptric prisms.

12. The marking material according to any preceding claim and in which said marking strip comprises a coloured low-current-drawing electrical light source which is activated when the temperature of a sensor drops below a predefined point.

## Patentansprüche

1. Vorgefertigtes bandartiges Straßenmarkierungs-Verbundmaterial zum horizontalen Markieren von Straßen, umfassend, in Kombination,
a) ein auf der Fahrbahnoberfläche anzubringendes, ununterbrochenes Trägerband (8, 22, 42);
b) eine Reihe von vorstehenden durchsichtigen Elementen (7), die an vorherbestimmten, längs des Trägerbandes verteilten Stellen angeordnet sind und Schwachstrombetriebene, aktive elektrische Lichtquellen (6, 16, 18, 48) enthalten;
c) die elektrischen Lichtquellen mit einer elektrischen Schwachstromquelle verbindende Schaltungsmittel, die eine Steuerschalteinrichtung (1, 12, 24, 26, 34, 38, 52, 60, 62, 64, 66) zur Steuerung der Speisung der Lichtquellen mit einem von der Stromquelle erzeugten Strom aufweisen, wobei die Schaltungsmittel in dem Trägerband angeordnet sind,
d) wobei die Steuerschalteinrichtung eine lichtempfindliche Einrichtung (1-4, 12, 52) aufweist, die auf dem Band angeordnet und mit Licht von den Scheinwerfern von sich nähernden Kraftfahrzeugen erregbar ist und auf Grund dessen in Abhängigkeit von von den Scheinwerfern von sich nähernden Kraftfahrzeugen empfangendem Licht ein Speisen der Lichtquellen bewirkt,
**dadurch gekennzeichnet, daß**
auf dem Markierungsband (22) außer den schwachstrombetriebenen Lichtquellen (6, 16, 18, 48) Glühfäden aufweisende Mikrolampen (20) für die Verwendung bei Nebel angeordnet sind und daß
außer der lichtempfindlichen Einrichtung (12, 52) zur Steuerung der Speisung der schwachstrombetriebenen Lichtquellen (16, 18, 48) eine weitere lichtempfindliche Einrichtung (14) mit einer von der Stirnfläche der erstgenannten lichtempfindlichen Einrichtung (12) abgekehrten Stirnfläche vorgesehen ist, die die schwachstrombetriebene Lichtquellen steuert und einer oder mehreren der auf dem Markierungsband angeordneten schwachstrombetriebenen Lichtquellen zugekehrt ist, so daß die weitere lichtempfindliche Einrichtung bei ihrer Erregung durch eine der schwachstrombetriebenen Lichtquellen bei Nebel eine Stromzufuhr zu den Glühfäden aufweisenden Mikrolampen (20) bewirkt.

2. Markierungsmaterial nach Anspruch 1, in dem ein Relais (28) einen Schalter (30) schließt, um beim Empfang von schwächerem Licht durch die weitere lichtempfindliche Einrichtung (4) eine Zuführung von Strom von einer externen Leitung (32) zu den Mikrolampen (20) zu veranlassen.

3. Markierungsmaterial nach Anspruch 2, in dem das Relais (28) den Schalter (30) öffnet, wenn die von der zweiten lichtempfindlichen Einrichtung (14) fallende Lichtmenge nicht durch Nebel verringert wird.

4. Markierungsmaterial nach Anspruch 2 oder 3, in dem beide lichtempfindlichen Einrichtungen mit einer Fokussierungslinseneinheit versehen sind, die das von den Scheinwerfern eines sich nähernden Kraftfahrzeuges kommende Licht bündelt.

5. Markierungsmaterial nach einem der Ansprüche 1 bis 4, in dem die Steuerschalteinrichtung ferner ein Zeitglied (64, Figur 8) aufweist, das bewirkt, daß zwischen dem Zeitpunkt, in dem die lichtempinfliche Einrichtung (52, Figur 8) erregt wird, und dem Beginn der Speisung der schwachstrombetriebenen Lichtquellen eine Verzögerungszeit verstreicht.

6. Markierungsmaterial nach einem der Ansprüche 1 bis 5, in dem die Steuerschalteinrichtung ferner einen Zeitgeber (66, Figur 8) aufweist, der bewirkt, daß die schwachstrombetriebenen Lichtquellen im Blinkbetrieb arbeiten.

7. Markierungsmaterial nach einem der Ansprüche 1 bis 6 mit zum Empfang von Tageslichtsolarenergie und zum Umwandeln derselben in elektrische Energie dienenden Photostromerzeugern (44, Figur 7), die zusammen mit einer geeigneten Speichereinrichtung (54, Figur 8) die elektrische Schwachstromquelle bilden, wobei die Stromerzeuger (44) und die Speichereinrichtung (54) auf oder in dem Trägerband montiert sind.

8. Markierungsmaterial nach einem der vorhergehenden Ansprüche, dadurch gekennzeichnet, daß die schwachstrombetriebenen elektrischen Leuchtdioden sind.

9. Markierungsmaterial nach einem der vorhergehenden Ansprüche, dadurch gekennzeichnet, daß die lichtempfindliche Einrichtung eine Lichtfokussierungseinheit (4, Figur 1) aufweist.

10. Markierungsmaterial nach einem der vorhergehenden Ansprüche, dadurch gekennzeichnet, daß das Material ferner auf seiner Oberfläche angeordnete rückstrahlfähige Elemente (46, Figur 7) aufweist.

11. Markierungsmaterial nach Anspruch 10, dadurch gekennzeichnet, daß die rückstrahlfähigen Elemente katadioptrische Prismen sind.

12. Markierungsmaterial nach einem der vorhergehenden Ansprüche, in dem das Markierungsband eine farbige schwachstrombetriebene farbige elektrische Lichtquelle aufweist, die aktiviert wird, wenn die Temperatur eines Sensors unter einen vorherbestimmten Wert sinkt.

## Revendications

1. Matériel préfabriqué composite, en genre de ruban, de marquage de route, à des fins d'un marquage horizontal de route, sous la forme d'un ruban composite de marquage, comprenant en combinaison :
a) un ruban de base continu (8, 22, 42) à appliquer sur la surface de la route,
b) une série d'éléments saillants transparents (7) situés à des positions prédéterminées réparties le long du ruban de base, les éléments saillants logeant des sources lumineuses électriques (6, 16, 18, 48) actives et prélevant peu de courant,
c) des moyens de circuit qui connectent lesdites sources lumineuses électriques à une alimentation en énergie électrique à faible courant, comprenant des moyens de commutation de commande (1, 12, 24, 26, 34, 38, 52, 60, 62, 64, 66) pour commander l'alimentation des sources lumineuses avec un courant produit par l'alimentation en énergie, les moyens de circuit étant agencés dans le ruban de base,
d) les moyens de commutation de commande comprenant un dispositif photosensible (1 à 4, 12, 52) situé sur le ruban et agencé pour être excité par de la lumière en provenance des phares de véhicules automobiles qui approchent, une alimentation des sources lumineuses étant effectuée par cela en fonction de la lumière reçue des phares de véhicules automobiles qui approchent,
caractérisé en ce que :
en plus des sources lumineuses (6, 16, 18, 48) qui prélèvent peu de courant, il est également agencé sur la bande de marquage (22) des microlampes (20) de type à filament destinées à être utilisées lorsqu'il y a des conditions brumeuses, et
en plus du dispositif photosensible (12, 52) qui commande l'alimentation des sources lumineuses (16, 18, 48) qui prélèvent peu de courant, il y a également un autre dispositif photosensible (14) positionné pour faire face dans la direction opposée à celle du dispositif photosensible (12) commandant les sources lumineuses qui prélèvent peu de courant et pour faire face à une ou plusieurs des sources lumineuses prélevant peu de courant positionnées sur le ruban de marquage de façon qu'étant excité par une des sources lumineuses prélevant peu de courant, ledit autre dispositif photosensible active le courant vers les microlampes (20) de type à filament lorsqu'il y a des conditions brumeuses.

2. Matériel de marquage suivant la revendication 1, caractérisé en ce qu'un relais (28) met sous tension un commutateur (30) lorsqu'une intensité réduite de lumière est reçue par l'autre dispositif photosensible (14), afin d'amener du courant à s'écouler vers les microlampes (20) à partir d'une ligne externe (32).

3. Matériel de marquage suivant la revendication 2, caractérisé en ce que le relais (28) met hors tension le commutateur (30) lorsque la quantité de lumière reçue par le second dispositif photosensible (14) n'est pas diminuée par du brouillard.

4. Matériel de marquage suivant la revendication 2 ou la revendication 3, caractérisé en ce que les deux dispositifs photosensibles sont munis d'un ensemble de lentilles de focalisation pour concentrer la lumière provenant des phares d'un véhicule automobile qui approche.

5. Matériel de marquage suivant l'une quelconque des revendications 1 à 4, caractérisé en ce que les moyens de commutation de commande comprennent en outre un temporisateur (64, figure 8) afin de provoquer un décalage de temps entre le moment où le dispositif photosensible (52, figure 8) est excité et le moment où les sources lumineuses prélevant peu de courant sont alimentées.

6. Matériel de marquage suivant l'une quelconque des revendications 1 à 5, caractérisé en ce que les moyens de commutation de commande comprennent en outre un temporisateur (66, figure 8) pour amener les sources lumineuses prélevant peu de courant à fonctionner selon un mode clignotant.

7. Matériel de marquage suivant l'une quelconque des revendications 1 à 6, caractérisé en ce qu'il comprend des générateurs de courant photoélectriques (44, figure 7) pour recevoir de l'énergie solaire de la lumière du jour et pour la convertir en énergie électrique, pour fournir par l'intermédiaire de moyens de stockage appropriés (54, figure 8) l'alimentation précitée en énergie électrique à faible courant, les générateurs de courant (44) et les moyens de stockage (54) étant montés sur ou dans le ruban de base.

8. Matériel de marquage suivant l'une quelconque des revendications précédentes, caractérisé en outre en ce que les sources lumineuses électriques prélevant peu de courant sont des diodes électroluminescentes.

9. Matériel de marquage suivant l'une quelconque des revendications précédentes, caractérisé en ce qu'en outre le dispositif photosensible comprend un ensemble de focalisation de lumière (4, figure 1).

10. Matériel de marquage suivant l'une quelconque des revendications précédentes, caractérisé en outre en ce que le matériel comprend de plus sur sa surface des éléments rétroréfléchissants (46, figure 7).

11. Matériel de marquage suivant la revendication 10, caractérisé en ce qu'en outre les éléments rétroréfléchissants sont des prismes de catadioptre.

12. Matériel de marquage suivant l'une quelconque des revendications précédentes, caractérisé en ce que le ruban de marquage comprend une source lumineuse électrique colorée, prélevant peu de courant, qui est activée lorsque la température d'un détecteur descend en dessous d'un point prédéterminé.
